# EUROPÄISCHE PATENTANMELDUNG

(11) **EP 3 366 366 A1**
(43) Veröffentlichungstag der Anmeldung: **29.08.2018**
(21) Anmeldenummer: 18158562.1
(22) Anmeldetag: 26.02.2018
(51) Int. Cl.: B01D 53/90, B01D 53/94, F01N 3/20, F01N 13/00

(54) **SYSTEM UND VERFAHREN ZUR ABGASBEHANDLUNG VON VERBRENNUNGSVORRICHTUNGEN**

(30) Priorität: 24.02.2017 DE 102017103923; 29.03.2017 DE 102017106757
(71) Anmelder: Deutsches Zentrum für Luft- und Raumfahrt e.V., 51147 Köln (DE)
(72) Erfinder: Hosseiny, Seyed Schwan, 49696 Molbergen (DE); Lettenmeier, Philipp, 70176 Stuttgart (DE); Gago Rodriguez, Aldo Saul, 70180 Stuttgart (DE); Friedrich, Kaspar Andreas, 73733 Esslingen (DE)
(74) Vertreter: Hoeger, Stellrecht & Partner Patentanwälte mbB

(57) **Zusammenfassung**

Um ein System zur Abgasbehandlung von Verbrennungsvorrichtungen, insbesondere von Verbrennungsmotoren, umfassend eine erste Behandlungskammer mit einem ersten Abgaseinlass, einem ersten Abgasauslass, einem Reduktionsmitteleinlass und einem Reduktionskatalysator, welcher erste Abgaseinlass direkt oder indirekt mit der Verbrennungsvorrichtung fluidwirksam verbindbar ist, wobei das System einen Abgasbehandlungsmittelspeicher zum Speichern eines Abgasbehandlungsmittels und eine Reduktionsmittelerzeugungseinrichtung zum Erzeugen eines Reduktionsmittels aus dem Abgasbehandlungsmittel umfasst, zu verbessern, wird vorgeschlagen, dass die Reduktionsmittelerzeugungseinrichtung in Form einer Elektrolyseeinrichtung zum Erzeugen des Reduktionsmittels aus dem Abgasbehandlungsmittel durch Elektrolyse ausgebildet ist.

Ferner wird ein verbessertes Verfahren zur Abgasbehandlung von Verbrennungsvorrichtungen vorgeschlagen.

## Beschreibung

Die vorliegende Erfindung betrifft ein System zur Abgasbehandlung von Verbrennungsvorrichtungen, insbesondere von Verbrennungsmotoren, umfassend eine erste Behandlungskammer mit einem ersten Abgaseinlass, einem ersten Abgasauslass, einem Reduktionsmitteleinlass und einem Reduktionskatalysator, welcher erste Abgaseinlass direkt oder indirekt mit der Verbrennungsvorrichtung fluidwirksam verbindbar ist, wobei das System einen Abgasbehandlungsmittelspeicher zum Speichern eines Abgasbehandlungsmittels und eine Reduktionsmittelerzeugungseinrichtung zum Erzeugen eines Reduktionsmittels aus dem Abgasbehandlungsmittel umfasst.

Ferner betrifft die vorliegende Erfindung eine Verbrennungsvorrichtung umfassend ein solches System zur Abgasbehandlung.

Des Weiteren betrifft die Erfindung ein Verfahren zur Abgasbehandlung von Verbrennungsvorrichtungen, insbesondere von Verbrennungsmotoren, umfassend das Reduzieren von Verbrennungsprodukten in Abgasen mit einem Reduktionsmittel unter Verwendung eines Reduktionskatalysators, das Bereitstellen eines Abgasbehandlungsmittels und das Erzeugen des Reduktionsmittels aus dem Abgasbehandlungsmittel.

Systeme und Verfahren zur Abgasbehandlung von Verbrennungsvorrichtungen sind in unterschiedlichen Varianten bekannt. Insbesondere ist es bekannt, im Abgas von Verbrennungsvorrichtungen, insbesondere von Verbrennungsmotoren, Stickoxide durch selektive katalytische Reduktion mit einem Reduktionskatalysator zu verringern. Die Stickoxide NO und NO₂ werden dabei reduziert. Hierfür wird Ammoniak benötigt. Dieser wird aus einer Harnstofflösung durch Thermolyse und Hydrolyse erzeugt. So können die Stickoxide zu molekularem Stickstoff und Wasser abgebaut werden. Derartige Systeme und Verfahren werden beispielsweise bei Kraftfahrzeugen, insbesondere Dieselfahrzeugen, erfolgreich in Serie eingesetzt. Sie ermöglichen die kontinuierliche Abgasbehandlung, ohne dass Teile oder Elemente des Systems regeneriert werden müssen.

Neueste Studien belegen jedoch, dass diese bekannte selektive katalytische Reduktion von Stickoxiden durch Einsatz von Harnstoff zwar sehr effektiv ist, jedoch auch andere Emissionen wie Ammoniak (NH₃), Distickstoffoxid (N₂O), Isocyansäure (HNCO), Kohlenwasserstoffe mit Treibhauseffekt (CH₄, C₃H₈ und nC₈) sowie assoziierte sekundäre Feinstoffbildung durch Ammoniumnitrat und Ammoniumsulfat erhöhen. Diese Stoffe werden teilweise als höchst toxisch für Mensch und Umwelt eingestuft. Daher muss aufwändig sichergestellt werden, dass ihr Anteil in den Abgasen unter den jeweils vorgegebenen Grenzwerten verbleibt.

Ferner ist die Herstellung des benötigten Harnstoffs nach dem bekannten Haber-Bosch-Verfahren sehr energieintensiv und stellt eine große CO₂-Emissionsquelle dar.

Zudem muss für den Betrieb eines Kraftfahrzeugs sichergestellt werden, dass zum Betreiben desselben Harnstoff als Abgasbehandlungsmittel in wässriger Lösung zur Verfügung steht.

Zudem sind Systeme bekannt, beispielsweise aus der WO 20017/033124 A2, bei denen Stickoxidspeicher, auch als Stickoxidfallen bezeichnet, im Abgasstrang von Verbrennungsmotoren eingesetzt werden, um Stickoxide (NOₓ) zu speichern. Beispielsweise werden als NOₓ-Speicher Alkali- und Erdalkalimetalle verwendet, die Stickoxide adsorbieren. Wenn der NOₓ-Speicher seine Speicherkapazität erreicht hat, muss er regeneriert werden. Dies kann insbesondere dadurch erreicht werden, dass der Verbrennungsmotor kurzzeitig, in der Regel für einige Sekunden, mit unterstöchiometrischem Gemisch betrieben wird. Die während der Regeneration des NOₓ-Speichers bei der Verbrennung im Verbrennungsmotor entstehenden Stickoxide werden unbehandelt ausgestoßen. Mithin findet also keine kontinuierliche Abgasbehandlung statt, sondern eine Behandlung des Abgases, die teilweise, nämlich für die Dauer der Regeneration des Stickoxidspeichers oder der Stickoxidfalle, unterbrochen wird, so dass ein Teil des vom Verbrennungsmotor abgegebenen Abgases unbehandelt mit einem zeitweise erhöhten Stickoxid-Anteil entweichen kann.

Ferner ist zu berücksichtigen, dass NOₓ-Speicher auf Basis von Alkali- und Erdalkalimetalle auch Schwefeloxide adsorbieren, die bei der motorischen Verbrennung aus dem im Kraftstoff enthaltenen Schwefel entstehen können, in Form von Sulfaten. Eine Schwefel-Regeneration findet deshalb erst bei höheren Temperaturen statt, als sie für eine Regeneration des NOₓ-Speichers erforderlich sind. Daher kommt es mit fortschreitender Zeit zu einer Blockade der Speicherelemente, so dass die NOₓ-Speicherfähigkeit empfindlich abnimmt.

Es ist daher eine Aufgabe der vorliegenden Erfindung, ein System und ein Verfahren der eingangs beschriebenen Art weiter zu verbessern.

Diese Aufgabe wird bei einem System der eingangs beschriebenen Art erfindungsgemäß dadurch gelöst, dass die Reduktionsmittelerzeugungseinrichtung in Form einer Elektrolyseeinrichtung zum Erzeugen des Reduktionsmittels aus dem Abgasbehandlungsmittel durch Elektrolyse ausgebildet ist.

Eine solche Elektrolyseeinrichtung hat insbesondere den Vorteil, dass das Reduktionsmittel nach Bedarf erzeugt werden kann. Insbesondere lässt sich die Erzeugung des Reduktionsmittels bedarfsabhängig steuern und gegebenenfalls auch regeln. So kann insbesondere auf die Verwendung von Harnstofflösungen verzichtet werden. Die Thermolyse und Hydrolyse des Harnstoffs lässt sich deutlich schlechter, wenn überhaupt steuern. Zudem gibt es bei Harnstoff das Problem, dass Harnstofflösungen im Laufe der Zeit degradieren. Damit erfordert der Einsatz von Harnstofflösungen insbesondere auch eine kontinuierliche Messung einer Konzentration des Harnstoffs in der Lösung. Insbesondere die bedarfsabhängige Erzeugung des Reduktionsmittels ermöglicht es, diese Nachteile zu überwinden. Ferner ist eine Abgasbehandlung vollständig ohne Stickoxid-Speicher oder Stickoxidfallen möglich und damit eine kontinuierliche Abgasbehandlung. Mithin kann also insbesondere eine Stickoxid-Speicher-freies System beziehungsweise ein Stickoxidfallen-freies System ausgebildet werden. Dies hat insbesondere den Vorteil, dass keine Regeneration des Stickoxid-Speichers oder der Stickoxidfalle erforderlich ist. Mithin kann also insbesondere das gesamte von der Verbrennungseinrichtung erzeugte Abgas in gewünschter Weise kontinuierlich behandelt werden. Die Abgasbehandlung kann also insbesondere in der ersten Behandlungskammer direkt mit dem Reduktionsmittel ohne irgendwelche Speicher erfolgen. Ferner vereinfacht sich der Aufbau des Systems, da keine Speicher oder Fallen für NOₓ benötigt werden. Auch eine Steuerung des Systems vereinfacht sich aus diesem Grund.

Vorzugsweise ist die Elektrolyseeinrichtung in Form eines Wasserelektrolyseurs ausgebildet. Ein Wasserelektrolyseur ermöglicht es, Wasser durch Elektrolyse in molekularen Wasserstoff und molekularen Sauerstoff zu trennen. Insbesondere kann der molekulare Wasserstoff genutzt werden, um Stickstoffmonoxid und Stickstoffdioxid zu reduzieren, insbesondere unter Bildung von Stickstoff und Wasser. Optional kann der durch Elektrolyse erzeugte Sauerstoff genutzt werden, um Stickstoffmonoxid zu Stickstoffdioxid zu oxidieren. Die Erzeugung der Elektrolyseprodukte Wasserstoff und Sauerstoff lässt sich bei einem Wasserelektrolyseur auf einfache Weise steuern und gegebenenfalls auch regeln. So kann immer die im Betrieb der Verbrennungsvorrichtung erforderliche Menge an Wasserstoff als Reduktionsmittel und gegebenenfalls auch Sauerstoff als Oxidationsmittel erzeugt werden, um so das Abgas optimal zu behandeln und insbesondere von Stickoxiden zu befreien.

Vorzugsweise ist die Elektrolyseeinrichtung in Form einer kammergetrennten Elektrolyseeinrichtung ausgebildet zum Trennen des bei der Elektrolyse entstehenden Reduktionsmittels von dem entstehenden Oxidationsmittel. Eine solche Elektrolyseeinrichtung ermöglicht es insbesondere, die erzeugten Elektrolyseprodukte getrennt voneinander zu nutzen. Insbesondere kann dadurch auch verhindert werden, dass die Elektrolyseprodukte wieder miteinander reagieren. Insbesondere bei der Elektrolyse von Wasser sollte dies vermieden werden, da Mischungen aus molekularem Wasserstoff und Sauerstoff bei entsprechenden Mischungsverhältnissen hochexplosiv sind. Ferner erlaubt es ein kammergetrennter Elektrolyseur, die Elektrolyseprodukte gezielt dorthin zu leiten oder zu führen, wo sie benötigt werden. Optional können sie auch zwischengespeichert werden. Ein solcher kammergetrennter Elektrolyseur kann insbesondere in Form eines elektrochemischen Membranreaktors ausgebildet sein.

Vorteilhaft ist es, wenn die Elektrolyseeinrichtung fluidwirksam mit der ersten Behandlungskammer verbunden ist zum Zuführen des erzeugten Reduktionsmittels zur ersten Behandlungskammer. So kann das Reduktionsmittel in gewünschter Weise und insbesondere auch in gewünschter Menge und Dosierung der ersten Behandlungskammer zugeführt werden, um im Abgas enthaltene Verbrennungsprodukte zu reduzieren.

Gemäß einer weiteren bevorzugten Ausführungsform der Erfindung kann vorgesehen sein, dass das System eine zweite Behandlungskammer umfasst mit einem zweiten Abgaseinlass, einem zweiten Abgasauslass, einem Oxidationsmitteleinlass und einem Oxidationskatalysator. Ein derart weitergebildetes System ermöglicht es insbesondere, im Abgas enthaltene Verbrennungsprodukte gezielt weiter zu oxidieren, um die Bildung unerwünschter Nebenprodukte zu vermeiden. Beispielsweise kann so Stickstoffmonoxid durch Zugabe von molekularem Sauerstoff als Oxidationsmittel zu Stickstoffdioxid oxidiert werden. Stickstoffdioxid lässt sich dann in bekannter Weise durch Zugabe von molekularem Wasserstoff zu molekularem Stickstoff unter Bildung von Wasser reduzieren. Auch hierfür bedarf eines keines Stickoxid-Speichers, welcher bei Erreichen seiner Aufnahmekapazität regeneriert werden muss. Das erfindungsgemäße System ist also insbesondere Stickoxid-Speicher-frei beziehungsweise Stickoxidfallen-frei ausgebildet. Das System ist daher kontinuierlich arbeitend ausgebildet im Gegensatz zu einem quasikontinuierlichen oder intermittierenden Betrieb bei Einsatz ein Stickoxid-Speichern oder Stickoxidfallen.

Vorzugsweise ist der zweite Abgasauslass fluidwirksam mit dem ersten Abgaseinlass verbunden. Dies ermöglicht es insbesondere, das Abgas beziehungsweise die darin enthaltenen Verbrennungsprodukte zunächst weiter zu oxidieren und die so oxidierten Verbrennungsprodukte aus der zweiten Behandlungskammer in die erste Behandlungskammer zu leiten, um sie dort in gewünschter Weise zu reduzieren.

Vorteilhaft ist es, wenn der Abgasbehandlungsmittelspeicher in Form eines Wasserspeichers ausgebildet ist. Wasser lässt sich auf einfache Weise speichern und ist leicht verfügbar. Anders als bei Harnstofflösungen ist hier keine Degradation zu fürchten. Anders als bei Harnstofflösungen muss hier keine Konzentration überwacht und gemessen werden. Zudem sind keine weiteren Chemikalien für die Abgasbehandlung erforderlich. Des Weiteren kann beim Einsatz von Wasser nicht nur der durch Elektrolyse erzeugte molekulare Wasserstoff zur Abgasbehandlung genutzt werden, sondern auch der erzeugte molekulare Sauerstoff. Ein solches System ist für einen Anwender leicht handhabbar und insbesondere auch für Großserien gut umsetzbar.

Vorzugsweise ist das Abgasbehandlungsmittel Wasser. Wie bereits beschrieben ist Wasser völlig ungefährlich und leicht verfügbar. Es kann von einem Anwender bei Bedarf jederzeit und überall nachgefüllt werden. Zudem ist es kostengünstig verfügbar.

Um das Abgasbehandlungsmittel wie gewünscht elektrolysieren zu können, ist es vorteilhaft, wenn die Elektrolyseeinrichtung mit dem Abgasbehandlungsmittelspeicher fluidwirksam verbunden ist.

Vorteilhaft ist es, wenn die Elektrolyseeinrichtung im Abgasbehandlungsmittelspeicher angeordnet oder ausgebildet ist. So lässt sich das System besonders kompakt ausbilden.

Vorteilhafterweise umfasst das System eine Heizeinrichtung zum Beheizen des Abgasbehandlungsmittelspeichers. Insbesondere dann, wenn als Abgasbehandlungsmittel Wasser verwendet wird, ist eine solche Heizeinrichtung vorteilhaft, um das Abgasbehandlungsmittel in flüssiger Phase zu halten. Insbesondere kann es so auf eine gewünschte Temperatur erwärmt werden, bei der die Elektrolyse des Abgasbehandlungsmittels besonders effizient durchgeführt werden kann.

Günstig ist es, wenn der Reduktionskatalysator Palladium ist oder enthält. Palladium kann insbesondere auch auf einem Träger bereitgestellt werden. Palladium eignet sich insbesondere hervorragend zur Unterstützung der Reduktion von Stickoxiden mittels molekularen Wasserstoffs.

Vorteilhaft ist es, wenn der Oxidationskatalysator Platin ist oder enthält. Insbesondere kann das Platin auf einem Träger bereitgestellt werden. Platin eignet sich als hocheffizienter Katalysator für eine Oxidation von Stickoxiden durch molekularen Sauerstoff.

Gemäß einer weiteren bevorzugten Ausführungsform der Erfindung kann vorgesehen sein, dass das System eine Messeinrichtung zum Messen eines NOₓ-Gehalts des in die erste Behandlungskammer einströmenden Abgases umfasst. Die Messeinrichtung ermöglicht es insbesondere, den NOₓ-Gehalt zu bestimmen und den Messwert insbesondere zu nutzen, um die Menge des zugeführten Reduktionsmittels zur ersten Behandlungskammer zu steuern und/oder zu regeln. Insbesondere kann ein solcher Messwert auch genutzt werden, um die Elektrolyseeinrichtung zu steuern und/oder zu regeln. So kann abhängig vom gemessenen NOₓ-Gehalt die erforderliche Menge an Reduktionsmittel erzeugt und in definierter Menge und Dosierung der ersten Behandlungskammer zugeführt werden.

Ferner ist es vorteilhaft, wenn das System eine Temperaturmesseinrichtung zum Messen einer Temperatur des Abgases in der ersten Behandlungskammer umfasst. Insbesondere kann die gemessene Temperatur des Abgases genutzt werden, um die Zufuhr des Reduktionsmittels zu steuern und/oder zu regeln und optional auch die Elektrolyseeinrichtung temperaturabhängig zu steuern und/oder zu regeln.

Ferner ist es günstig, wenn das System eine Reduktionsmittelzuführeinrichtung zum Zuführen des Reduktionsmittels zur ersten Behandlungskammer umfasst. Insbesondere kann die Reduktionsmittelzuführeinrichtung eine Pumpeinrichtung und/oder eine Dosiereinrichtung umfassen, um das Reduktionsmittel, insbesondere wenn es gasförmig ist, in gewünschter Menge und unter gewünschtem Druck, in die erste Behandlungskammer zu leiten.

Ferner kann es vorteilhaft sein, wenn das System eine Oxidationsmittelzuführeinrichtung zum Zuführen des Oxidationsmittels zur zweiten Behandlungskammer umfasst. Die Oxidationsmittelzuführeinrichtung kann insbesondere eine Pumpeinrichtung und/oder eine Dosiereinrichtung umfassen, um das Oxidationsmittel in gewünschter Menge und, wenn es gasförmig vorliegt, auch unter einem definierten Druck, in die zweite Behandlungskammer einzuleiten.

Günstig ist es, wenn das System eine Steuer- und/oder Regelungseinrichtung umfasst zum Steuern und/oder Regeln der Elektrolyseeinrichtung und/oder der Reduktionsmittelzuführeinrichtung und/oder der Oxidationsmittelzuführeinrichtung. Insbesondere kann die Steuer- und/oder Regelungseinrichtung ausgebildet sein, um die Elektrolyseeinrichtung und/oder die Reduktionsmittelzuführeinrichtung und/oder die Oxidationsmittelzuführeinrichtung in Abhängigkeit des mit der Messeinrichtung bestimmten NOₓ-Gehalts des in die erste Behandlungskammer einströmenden Abgases und/oder in Abhängigkeit der mit der Temperaturmesseinrichtung gemessenen Temperatur des Abgases in der ersten Behandlungskammer zu steuern und/oder zu regeln. Insbesondere kann so auf einfache Weise bedarfsabhängig die Menge erforderlichen Reduktionsmittels und optional auch erforderlichen Oxidationsmittels in definierter Weise gesteuert und/oder geregelt werden.

Besonders einfach und kompakt ausbilden lässt sich das System, wenn der erste Abgaseinlass mit dem Reduktionsmitteleinlass fluidwirksam verbunden ist oder den Reduktionsmitteleinlass bildet. So kann dem Abgas bereits vor dem Einströmen in die erste Behandlungskammer das Reduktionsmittel zugeführt werden. So kann eine optimale Durchmischung des Abgases und des Reduktionsmittels erreicht und damit eine Effizienz der Reduktionsreaktion in der ersten Behandlungskammer verbessert werden.

Die eingangs gestellte Aufgabe wird insbesondere bei einer Verbrennungsvorrichtung der eingangs beschriebenen Art erfindungsgemäß dadurch gelöst, dass sie eines der oben beschriebenen, weitergebildeten Systeme zur Abgasbehandlung umfasst.

Eine Verbrennungsvorrichtung, die mit derartigen Systemen zur Abgasbehandlung zusammenwirkt oder eines derselben umfasst, ermöglicht es insbesondere, unerwünschte Verbrennungsprodukte im Abgas, beispielsweise Stickoxide, durch definierte Reduktion und/oder Oxidation einfach und sicher zu entfernen.

Günstigerweise ist die Verbrennungsvorrichtung in Form eines Verbrennungsmotors, einer Feuerungsanlage, einer Müllverbrennungsanlage, einer Gasturbine oder einer Industrieanlage ausgebildet. Insbesondere entstehen beim Betrieb derartiger Verbrennungsvorrichtungen in unerwünschter Weise Stickoxide. Diese lassen sich mit einem der oben beschriebenen weitergebildeten Systeme zur Abgasbehandlung auf einfache und definierte Weise in unschädliche Reaktionsprodukte umwandeln, insbesondere in molekularen Stickstoff und Wasser. Insbesondere beim Einsatz von Wasser als Abgasbehandlungsmittel kann so auf eine kostenintensive Herstellung von Harnstofflösungen verzichtet werden. Wasserstoff kann durch Elektrolyse auch in großem Maßstab auf einfache Weise erzeugt werden, sodass auch bei großen Anlagen, insbesondere bei der Müllverbrennung, bei Industrieanlagen und beim Betrieb von Gasturbinen erzeugte Stickoxide einfach und sicher abgebaut werden können.

Die eingangs gestellte Aufgabe wird ferner bei einem Verfahren der eingangs beschriebenen Art erfindungsgemäß dadurch gelöst, dass das Reduktionsmittel aus dem Abgasbehandlungsmittel durch Elektrolyse erzeugt wird.

Das erfindungsgemäß weitergebildete Verfahren ermöglicht es, das Reduktionsmittel ganz gezielt dann zu erzeugen, wenn es benötigt wird. Es kann insbesondere in der Menge erzeugt werden, die für eine optimale Behandlung des Abgases erforderlich ist, insbesondere zum Abbau unerwünschter Verbrennungsprodukte im Abgas. Bei diesen kann es sich insbesondere um Stickoxide handeln. Zudem kann die Abgasbehandlung vollständig ohne Stickoxid-Speicher oder Stickoxidfallen durchgeführt und damit eine kontinuierliche Abgasbehandlung erreicht werden. Mithin kann also insbesondere eine Stickoxid-Speicher-freies Verfahren beziehungsweise ein Stickoxidfallen-freies Verfahren durchgeführt werden. Dies hat insbesondere den Vorteil, dass keine Regeneration des Stickoxid-Speichers oder der Stickoxidfalle erforderlich ist. Mithin kann also insbesondere das gesamte von der Verbrennungseinrichtung erzeugte Abgas in gewünschter Weise kontinuierlich behandelt werden.

Vorzugsweise wird das Reduktionsmittel durch Elektrolyse von Wasser erzeugt. So kann insbesondere molekularer Wasserstoff als Reduktionsmittel hergestellt werden durch Wasserelektrolyse. Hierfür wird lediglich elektrischer Strom benötigt.

Vorteilhaft ist es, wenn das bei der Elektrolyse entstehende Reduktionsmittel von dem entstehenden Oxidationsmittel getrennt wird. So kann insbesondere vermieden werden, dass das Reduktionsmittel und das Oxidationsmittel wieder zum Abgasbehandlungsmittel reagieren. Insbesondere bei der Elektrolyse von Wasser kann so vermieden werden, dass Sauerstoff und Wasserstoff ein explosionsfähiges Knallgasgemisch ausbilden können.

Um das Abgas in definierter Weise behandeln zu können, ist es günstig, wenn das erzeugte Reduktionsmittel dem Abgas in einer ersten Behandlungskammer zugeführt wird. Insbesondere kann es dem Abgas auch in einer Zuleitung zur ersten Behandlungskammer zugeführt werden, um eine besonders gute Durchmischung des Abgases und des Reduktionsmittels zu erreichen.

Ferner ist es vorteilhaft, wenn Verbrennungsprodukte im Abgas mit einem Oxidationsmittel unter Verwendung eines Oxidationskatalysators oxidiert werden. Beispielsweise lassen sich Stickoxide so in definierter Weise weiter oxidieren, um insbesondere die Ausbildung von Ammoniak zu vermeiden. Ferner lässt sich Sauerstoff als Oxidationsmittel nutzen. Dieser Sauerstoff kann insbesondere bei der Elektrolyse von Wasser erzeugt werden. Beispielsweise kann der Sauerstoff genutzt werden, um andere Schadstoffe im Abgas, wie insbesondere Kohlenstoffmonoxid oder Kohlenwasserstoffe, zu reinigen. Beispielsweise kann der molekulare Wasserstoff bei einem Kraftfahrzeug und insbesondere einem Abgasreinigungssystem für ein Kraftfahrzeug ergänzend bei der Reduktion von Stickoxiden und insbesondere auch zur Verwendung bei einem Diesel-Oxidations-Katalysator genutzt werden. Insbesondere kann eine solche Oxidation getrennt von der oben beschriebenen Reduktionsreaktion durchgeführt werden, beispielsweise in einer zweiten Behandlungskammer.

Vorzugsweise werden die Reduktion von Verbrennungsprodukten und die Oxidation von Verbrennungsprodukten in der ersten Behandlungskammer durchgeführt. Beispielsweise können die Oxidationskatalysatoren und Reduktionskatalysatoren in der ersten Behandlungskammer entsprechend angeordnet werden, um die Oxidation beziehungsweise Reduktion von Verbrennungsprodukten im Abgas zu fördern und eine Reaktion des Oxidationsmittels mit dem Reduktionsmittel in der ersten Behandlungskammer zu vermeiden.

Vorzugsweise wird die Oxidation von Verbrennungsprodukten vor der Reduktion durchgeführt. Dies kann insbesondere in getrennten Behandlungskammern erreicht werden oder durch entsprechende räumliche Anordnung von Oxidationskatalysator und Reduktionskatalysator. So können insbesondere die zunächst oxidierten Verbrennungsprodukte in einem nächsten Schritt einer Reduktionsreaktion unterzogen werden.

Besonders einfach durchführen lässt sich das Verfahren, wenn Wasser als Abgasbehandlungsmittel bereitgestellt wird. Wasser ist kostengünstig und einfach zu handhaben. Insbesondere lässt es sich problemlos speichern.

Vorzugsweise wird die Elektrolyse im Abgasbehandlungsmittelspeicher durchgeführt. So lassen sich insbesondere kompakte Systeme zur Abgasbehandlung ausbilden. Beispielsweise kann ein Elektrolyseur so auch zum Temperieren oder Beheizen des Abgasbehandlungsmittelspeichers genutzt werden.

Ferner ist es vorteilhaft, wenn das Abgasbehandlungsmittel erwärmt oder aufgeheizt oder temperiert wird. Insbesondere kann so verhindert werden, dass sich ein flüssiges Abgasbehandlungsmittel in unerwünschter Weise verfestigt. So lässt es sich auf einfache Weise in der flüssigen Phase halten.

Eine optimale Reduktion von Verbrennungsprodukten in Abgasen kann erreicht werden, wenn der Reduktionskatalysator in Form von Palladium oder in Form eines Palladium enthaltenden Katalysators bereitgestellt wird.

Ferner kann eine Oxidation von Verbrennungsprodukten im Abgas weiter verbessert werden, wenn der Oxidationskatalysator in Form von Platin oder in Form eines Platin enthaltenden Katalysators bereitgestellt wird.

Günstig ist es, wenn der NOₓ-Gehalt des Abgases vor der Reduktion gemessen wird. So kann beispielsweise der gemessene NOₓ-Gehalt genutzt werden, um die Zufuhr des Reduktionsmittels zu steuern und/oder zu regeln.

Günstig ist es insbesondere, wenn eine Temperatur des Abgases bei der Oxidation gemessen wird. So kann insbesondere eine Zufuhr des Oxidationsmittels gesteuert und/oder geregelt werden.

Gemäß einer bevorzugten Variante des Verfahrens ist es günstig, wenn die Elektrolyse und/oder die Zufuhr des Reduktionsmittels und/oder die Zufuhr des Oxidationsmittels gesteuert und/oder geregelt werden. So kann eine Abgasbehandlung optimal durchgeführt werden, um beispielsweise sämtliche Stickoxide aus dem Abgas zu entfernen. Insbesondere ist es vorteilhaft, wenn die Elektrolyse und/oder die Zufuhr des Reduktionsmittels und/oder die Zufuhr des Oxidationsmittels in Abhängigkeit des gemessenen NOₓ-Gehalts des in die erste Behandlungskammer einströmenden Abgases und/oder in Abhängigkeit der gemessenen Temperatur des Abgases in der ersten Behandlungskammer gesteuert und/oder geregelt werden. So lässt sich die Abgasbehandlung weiter verbessern und optimieren.

Um eine besonders gute Durchmischung des Abgases mit dem Reduktionsmittel zu erreichen, ist es vorteilhaft, wenn das Abgas zusammen mit dem Reduktionsmittel in die erste Behandlungskammer eingeleitet wird. So kann eine Durchmischung des Abgases mit dem Reduktionsmittel schon vor dem Einleiten in die Behandlungskammer erfolgen.

Ferner wird die Verwendung eines der oben beschriebenen Systeme zur Durchführung eines der oben beschriebenen Verfahren vorgeschlagen. Insbesondere können die Systeme verwendet werden, um die beschriebenen Verfahren zur Abgasbehandlung durchzuführen, beispielsweise zur Behandlung von Abgasen von Verbrennungsvorrichtungen in Form von Verbrennungsmotoren, Feuerungsanlagen, Müllverbrennungsanlagen, Gasturbinen oder Industrieanlagen. Diese Liste an Verbrennungsvorrichtungen ist rein beispielhaft und nicht abschließend.

Die vorstehende Beschreibung umfasst somit insbesondere die nachfolgend in Form durchnummerierter Sätze definierten Ausführungsformen von Systemen und Verfahren zur Abgasbehandlung von Verbrennungsvorrichtungen:
1. System (10) zur Abgasbehandlung von Verbrennungsvorrichtungen (12), insbesondere von Verbrennungsmotoren (14), umfassend eine erste Behandlungskammer (18) mit einem ersten Abgaseinlass (88), einem ersten Abgasauslass (92), einem Reduktionsmitteleinlass (96) und einem Reduktionskatalysator (20), welcher erste Abgaseinlass (88) direkt oder indirekt mit der Verbrennungsvorrichtung (12) fluidwirksam verbindbar ist, wobei das System (10) einen Abgasbehandlungsmittelspeicher (32) zum Speichern eines Abgasbehandlungsmittels (34) und eine Reduktionsmittelerzeugungseinrichtung (36) zum Erzeugen eines Reduktionsmittels (30) aus dem Abgasbehandlungsmittel (34) umfasst, dadurch gekennzeichnet, dass die Reduktionsmittelerzeugungseinrichtung (36) in Form einer Elektrolyseeinrichtung (38) zum Erzeugen des Reduktionsmittels (30) aus dem Abgasbehandlungsmittel (34) durch Elektrolyse ausgebildet ist.
2. System nach Satz 1, dadurch gekennzeichnet, dass die Elektrolyseeinrichtung (38) in Form eines Wasserelektrolyseurs (40) ausgebildet ist.
3. System nach einem der voranstehenden Sätze, dadurch gekennzeichnet, dass die Elektrolyseeinrichtung (38) in Form einer kammergetrennten Elektrolyseeinrichtung (40) ausgebildet ist zum Trennen des bei der Elektrolyse entstehenden Reduktionsmittels (30) von dem entstehenden Oxidationsmittel (28).
4. System nach Satz einem der voranstehenden Sätze, dadurch gekennzeichnet, dass die Elektrolyseeinrichtung (38) fluidwirksam mit der ersten Behandlungskammer (18) verbunden ist zum Zuführen des erzeugten Reduktionsmittels (30) zur ersten Behandlungskammer (18).
5. System nach einem der voranstehenden Sätze, gekennzeichnet durch eine zweite Behandlungskammer (22) mit einem zweiten Abgaseinlass (100), einem zweiten Abgasauslass (102), einem Oxidationsmitteleinlass (94) und einem Oxidationskatalysator (24).
6. System nach Satz 5, dadurch gekennzeichnet, dass die erste Behandlungskammer (18) die zweite Behandlungskammer (22) bildet oder umfasst, dass der erste Abgaseinlass (88) den zweiten Abgaseinlass (100) bildet oder umfasst und dass der erste Abgasauslass (92) den zweiten Abgasauslass (102) bildet oder umfasst.
7. System nach Satz 5 oder 6, dadurch gekennzeichnet, dass der zweite Abgasauslass (100) fluidwirksam mit dem ersten Abgaseinlass (88) verbunden ist.
8. System nach einem der voranstehenden Sätze, dadurch gekennzeichnet, dass der Abgasbehandlungsmittelspeicher (32) in Form eines Wasserspeichers (42) ausgebildet ist.
9. System nach einem der voranstehenden Sätze, dadurch gekennzeichnet, dass das Abgasbehandlungsmittel (34) Wasser (44) ist.
10. System nach einem der voranstehenden Sätze, dadurch gekennzeichnet, dass die Elektrolyseeinrichtung (38) mit dem Abgasbehandlungsmittelspeicher (32) fluidwirksam verbunden ist.
11. System nach einem der voranstehenden Sätze, dadurch gekennzeichnet, dass die Elektrolyseeinrichtung (38) im Abgasbehandlungsmittelspeicher (32) angeordnet oder ausgebildet ist.
12. System nach einem der voranstehenden Sätze, gekennzeichnet durch eine Heizeinrichtung (112) zum Beheizen des Abgasbehandlungsmittelspeichers (32).
13. System nach einem der voranstehenden Sätze, dadurch gekennzeichnet, dass der Reduktionskatalysator (20) Palladium ist oder enthält.
14. System nach einem der Sätze 5 bis 13, dadurch gekennzeichnet, dass der Oxidationskatalysator (24) Platin ist oder enthält.
15. System nach einem der voranstehenden Sätze, gekennzeichnet durch eine Messeinrichtung (68) zum Messen eines NOₓ-Gehalts des in die erste Behandlungskammer (18) einströmenden Abgases (26).
16. System nach einem der voranstehenden Sätze, gekennzeichnet durch eine Temperaturmesseinrichtung (74) zum Messen einer Temperatur des Abgases (26) in der ersten Behandlungskammer (18).
17. System nach einem der voranstehenden Sätze, gekennzeichnet durch eine Reduktionsmittelzuführeinrichtung zum Zuführen des Reduktionsmittels (30) zur ersten Behandlungskammer (18).
18. System nach einem der Sätze 3 bis 17, gekennzeichnet durch eine Oxidationsmittelzuführeinrichtung zum Zuführen des Oxidationsmittels (28) zur zweiten Behandlungskammer (22).
19. System nach einem der voranstehenden Sätze, gekennzeichnet durch eine Steuer- und/oder Regelungseinrichtung (62) zum Steuern und/oder Regeln der Elektrolyseeinrichtung (38) und/oder der Reduktionsmittelzuführeinrichtung und/oder der Oxidationsmittelzuführeinrichtung, insbesondere in Abhängigkeit des mit der Messeinrichtung (68, 80) bestimmten NOₓ-Gehalts des in die erste Behandlungskammer (18) einströmenden Abgases (26) und/oder in Abhängigkeit der mit der Temperaturmesseinrichtung (74) gemessenen Temperatur des Abgases (26) in der ersten Behandlungskammer (18).
20. System nach einem der voranstehenden Sätze, dadurch gekennzeichnet, dass der erste Abgaseinlass (88) mit dem Reduktionsmitteleinlass (96) fluidwirksam verbunden ist oder den Reduktionsmitteleinlass (96) bildet.
21. Verbrennungsvorrichtung (12) umfassend ein System (10) zur Abgasbehandlung nach einem der voranstehenden Sätze.
22. Verbrennungsvorrichtung nach Satz 21, dadurch gekennzeichnet, dass die Verbrennungsvorrichtung (12) in Form eines Verbrennungsmotors (14), einer Feuerungsanlage, einer Müllverbrennungsanlage, einer Gasturbine oder einer Industrieanlage ausgebildet ist.
23. Verfahren zur Abgasbehandlung von Verbrennungsvorrichtungen (12), insbesondere von Verbrennungsmotoren (14), umfassend das Reduzieren von Verbrennungsprodukten im Abgas (26) mit einem Reduktionsmittel (30) unter Verwendung eines Reduktionskatalysators (20), das Bereitstellen eines Abgasbehandlungsmittels (34) und das Erzeugen des Reduktionsmittels (30) aus dem Abgasbehandlungsmittel (34), dadurch gekennzeichnet, dass das Reduktionsmittel (30) aus dem Abgasbehandlungsmittel (34) durch Elektrolyse erzeugt wird.
24. Verfahren nach Satz 23, dadurch gekennzeichnet, dass das Reduktionsmittel (30) durch Elektrolyse von Wasser (44) erzeugt wird.
25. Verfahren nach einem der Sätze 23 oder 24, dadurch gekennzeichnet, dass das bei der Elektrolyse entstehende Reduktionsmittel (30) von dem entstehenden Oxidationsmittel (28) getrennt wird.
26. Verfahren nach Satz einem der Sätze 23 bis 25, dadurch gekennzeichnet, dass das erzeugte Reduktionsmittel (30) dem Abgas (26) in einer ersten Behandlungskammer (18) zugeführt wird.
27. Verfahren nach einem der Sätze 23 bis 26, dadurch gekennzeichnet, dass Verbrennungsprodukte im Abgas (26) mit einem Oxidationsmittel (28) unter Verwendung eines Oxidationskatalysators (24) oxidiert werden.
28. Verfahren nach Satz 27, dadurch gekennzeichnet, dass die Reduktion von Verbrennungsprodukten und die Oxidation von Verbrennungsprodukten in der ersten Behandlungskammer (18) durchgeführt werden.
29. Verfahren nach Satz 27 oder 28, dadurch gekennzeichnet, dass die Oxidation von Verbrennungsprodukten vor der Reduktion durchgeführt wird.
30. Verfahren nach einem der Sätze 23 bis 29, dadurch gekennzeichnet, dass Wasser (44) als Abgasbehandlungsmittel (34) bereitgestellt wird.
31. Verfahren nach einem der Sätze 23 bis 30, dadurch gekennzeichnet, dass das Abgasbehandlungsmittel (34) in einem Abgasbehandlungsmittelspeicher (32) bereitgestellt wird.
32. Verfahren nach einem der Sätze 23 bis 31, dadurch gekennzeichnet, dass die Elektrolyse im Abgasbehandlungsmittelspeicher (32) durchgeführt wird.
33. Verfahren nach einem der Sätze 23 bis 32, dadurch gekennzeichnet, dass das Abgasbehandlungsmittel (34) erwärmt oder aufgeheizt oder temperiert wird.
34. Verfahren nach einem der Sätze 23 bis 33, dadurch gekennzeichnet, dass der Reduktionskatalysator (20) in Form von Palladium oder in Form eines Palladium enthaltenden Katalysators bereitgestellt wird.
35. Verfahren nach einem der Sätze 27 bis 34, dadurch gekennzeichnet, dass der Oxidationskatalysator (24) in Form von Platin oder in Form eines Platin enthaltenden Katalysators bereitgestellt wird.
36. Verfahren nach einem der Sätze 23 bis 35, dadurch gekennzeichnet, dass der NOₓ-Gehalt des Abgases (26) vor der Reduktion gemessen wird.
37. Verfahren nach einem der Sätze 27 bis 36, dadurch gekennzeichnet, dass eine Temperatur des Abgases (26) bei der Oxidation gemessen wird.
38. Verfahren nach einem der Sätze 23 bis 37, dadurch gekennzeichnet, dass die Elektrolyse und/oder die Zufuhr des Reduktionsmittels (30) und/oder die Zufuhr des Oxidationsmittels (28) gesteuert und/oder geregelt werden, insbesondere in Abhängigkeit des gemessenen NOₓ-Gehalts des in die erste Behandlungskammer (18) einströmenden Abgases (26) und/oder in Abhängigkeit der gemessenen Temperatur des Abgases (26) in der ersten Behandlungskammer (18).
39. Verfahren nach einem der Sätze 26 bis 38 dadurch gekennzeichnet, dass das Abgas (26) zusammen mit dem Reduktionsmittel (30) in die erste Behandlungskammer (18) eingeleitet wird.
40. Verwendung eines Systems (10) nach einem der Sätze 1 bis 20 zur Durchführung eines Verfahrens nach einem der Sätze 23 bis 39.

Die nachfolgende Beschreibung bevorzugter Ausführungsformen der Erfindung dient im Zusammenhang mit den Zeichnungen der näheren Erläuterung. Es zeigen:
- Figur 1:: eine schematische Darstellung eines Systems zur Abgasbehandlung einer Verbrennungsvorrichtung;
- Figur 2:: eine schematische Darstellung einer Elektrolyseeinrichtung, die in einem Abgasbehandlungsmittelspeicher angeordnet ist;
- Figur 3:: eine schematische Darstellung eines Systems zur Abgasbehandlung im Abgasstrang eines Dieselmotors;
- Figur 4:: eine schematische Darstellung eines katalytischen, auf Materialebene gekoppelten Systems;
- Figur 5:: eine schematische Darstellung eines weiteren gekoppelten katalytischen Systems;
- Figur 6:: eine Zusammenstellung von Reaktionsgleichungen bei der selektiven katalytischen Reduktion von Stickoxiden;
- Figur 7:: eine schematische Darstellung eines getrennten katalytischen Systems zur Reduktion von Stickoxiden;
- Figur 8:: eine schematische Darstellung eines weiteren Ausführungsbeispiels eines Systems zur Abgasbehandlung einer Verbrennungsvorrichtung;
- Figur 9:: eine schematische Darstellung eines weiteren Ausführungsbeispiels eines Systems zur Abgasbehandlung einer Verbrennungsvorrichtung;
- Figur 10:: eine schematische Darstellung eines weiteren Ausführungsbeispiels eines Systems zur Abgasbehandlung einer Verbrennungsvorrichtung;
- Figur 11:: eine schematische Darstellung eines weiteren Ausführungsbeispiels eines Systems zur Abgasbehandlung einer Verbrennungsvorrichtung; und
- Figur 12:: eine schematische Darstellung eines weiteren Ausführungsbeispiels eines Systems zur Abgasbehandlung einer Verbrennungsvorrichtung.

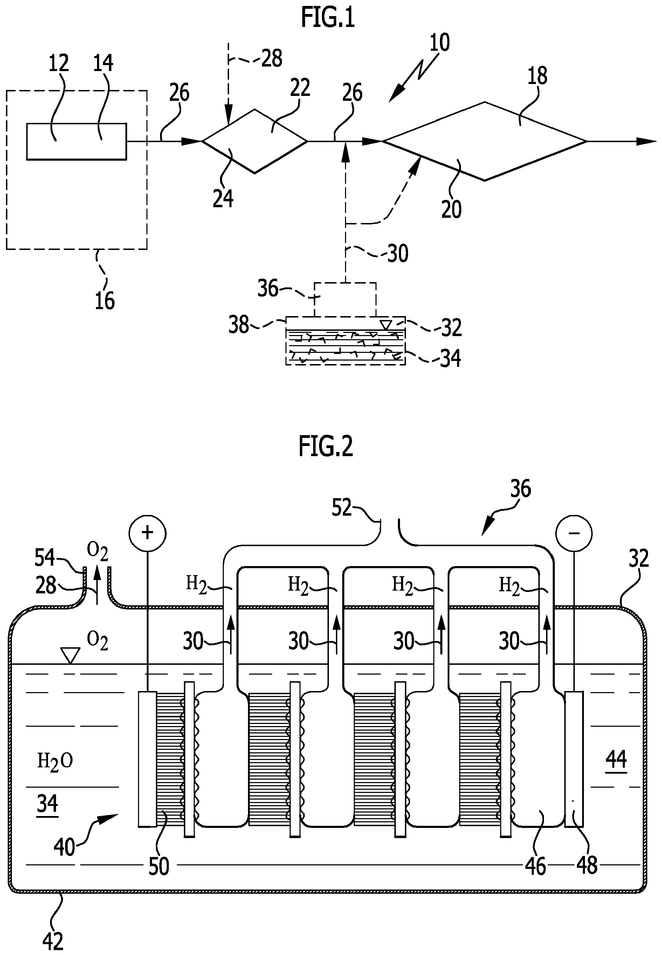

In Figur 1 ist schematisch ein insgesamt mit dem Bezugszeichen 10 bezeichnetes System zur Abgasbehandlung einer Verbrennungsvorrichtung 12 dargestellt. Die Verbrennungsvorrichtung 12 kann insbesondere in Form eines Verbrennungsmotors 14 eines Kraftfahrzeugs 16 oder eines Blockheizkraftwerks ausgebildet sein.

Das System 10 umfasst eine erste Behandlungskammer 18 in welcher ein Reduktionskatalysator 20 angeordnet ist.

Der ersten Behandlungskammer 18 vorgeschaltet ist eine zweite Behandlungskammer 22, in welcher ein Oxidationskatalysator 24 angeordnet ist.

Der Reduktionskatalysator 20 kann insbesondere Palladium sein oder enthalten. Der Oxidationskatalysator 24 kann insbesondere Platin sein oder enthalten.

Das Abgas 26 des Verbrennungsmotors 14 wird zunächst der zweiten Behandlungskammer 22 zugeführt, um im Abgas 26 enthaltene Stickoxide zu oxidieren. Um diese Oxidationsreaktion zu verbessern, kann optional ein Oxidationsmittel 28 der zweiten Behandlungskammer 22 zugeführt werden. Bei dem Oxidationsmittel 24 kann es sich insbesondere um molekularen Sauerstoff (O₂) handeln.

Nach dem Durchströmen der zweiten Behandlungskammer 22 wird das Abgas 26 zur ersten Behandlungskammer 18 geleitet.

Dem Abgas 26 kann vor dem Eintreten in die zweite Behandlungskammer 22 ein Reduktionsmittel 30 zugeführt oder beigemischt werden. Alternativ oder zusätzlich kann Reduktionsmittel 30 auch direkt der zweiten Behandlungskammer 22 zugeführt werden.

Die erste Behandlungskammer 18 ist somit indirekt über die zweite Behandlungskammer 22 mit der Verbrennungsvorrichtung 12 verbunden.

Bei dem Reduktionsmittel 30 kann es sich insbesondere um molekularen Wasserstoff (H₂) handeln.

Das Oxidationsmittel 28 und auch das Reduktionsmittel 30 können grundsätzlich in entsprechenden Speichereinrichtungen bereitgehalten werden, beispielsweise in Gasflaschen, in denen sie unter hohem Druck in flüssiger Form speicherbar sind.

Das in Figur 1 dargestellte System umfasst die zweite Behandlungskammer 22 lediglich optional. Auch die Zuführung des Oxidationsmittels 28 ist optional.

Alternativ kann das System 10 einen Abgasbehandlungsmittelspeicher 32 umfassen, in dem ein Abgasbehandlungsmittel 34 enthalten ist, beispielsweise Wasser 44 in flüssiger Phase.

Ferner kann das System 10 optional eine Reduktionsmittelerzeugungseinrichtung 36 umfassen, um das Reduktionsmittel 30 aus dem Abgasbehandlungsmittel 34 zu erzeugen.

Die Reduktionsmittelerzeugungseinrichtung 36 kann beispielsweise in Form einer Elektrolyseeinrichtung 38 ausgebildet sein zum Erzeugen des Reduktionsmittels 30 aus dem Abgasbehandlungsmittel 34 durch Elektrolyse.

Figur 2 zeigt schematisch eine Reduktionsmittelerzeugungseinrichtung 36 in Form eines Wasserelektrolyseurs 40. Dieser ist fluidwirksam mit dem Abgasbehandlungsmittelspeicher 32 verbunden. Dies ist, wie schematisch in Figur 2 dargestellt, dadurch realisiert, dass der Wasserelektrolyseur 40 im Abgasbehandlungsmittelspeicher 32, welcher in Form eines Wasserspeichers 42, auch als Wassertank bezeichnet, angeordnet ist.

Der Wasserelektrolyseur 40 ist in Form kammergetrennten Wasserelektrolyseurs ausgebildet zum Trennen des bei der Elektrolyse entstehenden Oxidationsmittels 28 in Form von molekularem Sauerstoff O₂ und dem bei der Elektrolyse entstehenden Reduktionsmittels 30 in Form von molekularem Wasserstoff H₂.

Im Wasserspeicher 42 ist Wasser 44 (H₂O) als Abgasbehandlungsmittel 34 gespeichert.

Der Wasserelektrolyseur 40 umfasst eine geschlossene Kathodenkammer 46, um den an der Kathode 48 entstehenden Wasserstoff aufzunehmen und vom entstehenden Sauerstoff getrennt zu halten. Der Wasserelektrolyseur 40 kann insbesondere eine Mehrzahl von Kathodenkammern 46 umfassen.

Der Wasserelektrolyseur 40 umfasst ferner eine offene Anodenkammer 50, so dass der bei der Elektrolyse gebildete Sauerstoff im Wasserspeicher 42 aufgefangen und zwischengespeichert werden kann.

Die Kathodenkammern 46 sind fluidwirksam miteinander verbunden und zu einem gemeinsamen Reduktionsmittelauslass 52 geführt.

Ferner ist am Wasserspeicher 42 ein Oxidationsmittelauslass 54 angeordnet oder ausgebildet, um den sich oberhalb des Wassers 44 sammelnden Sauerstoff aus dem Abgasbehandlungsmittelspeicher 32 abzuleiten.

Der Reduktionsmittelauslass 52 des in Figur 2 beispielhaft dargestellten Wasserspeichers 42 kann insbesondere direkt oder indirekt mit einer Abgasleitung verbunden sein, die das Abgas 26 der ersten Behandlungskammer 18 zuleitet. Alternativ oder zusätzlich kann der Reduktionsmittelauslass 52 auch direkt mit der zweiten Behandlungskammer 22 verbunden sein, um Reduktionsmittel 30 in Form von Wasserstoff in die erste Behandlungskammer 18 zu leiten.

Der Oxidationsmittelauslass 54 kann ferner in Fluidverbindung stehen mit der zweiten Behandlungskammer 22, um dieser wie oben in Verbindung mit Figur 1 beschrieben das Oxidationsmittel 28 zuzuführen zum Oxidieren von im Abgas 26 enthaltenen Verbrennungsprodukten, insbesondere von Stickstoffmonoxid NO.

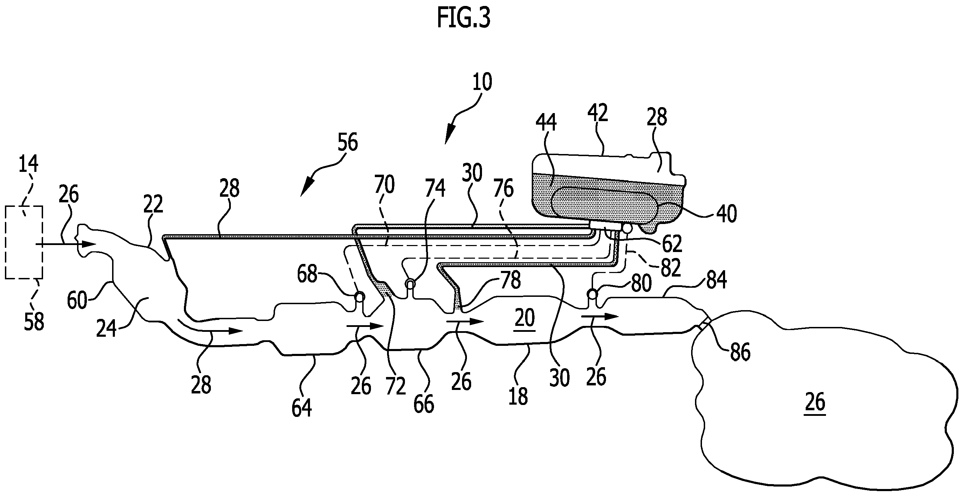

Figur 3 zeigt beispielhaft ein System 10 in Form einer Abgasreinigungsanlage 56 für einen Verbrennungsmotor 14 in Form eines Dieselmotors 58.

Das bei der Verbrennung im Dieselmotor 50 entstehende Abgas 26 wird zunächst in einen Diesel-Oxidations-Katalysator 60
eingeleitet. Bei diesem kann es sich um die zweite Behandlungskammer 22 handeln, in der ein Oxidationskatalysator 24 angeordnet ist.

Der Diesel-Oxidations-Katalysator 60 kann insbesondere in Fluidverbindung mit dem Wasserelektrolyseur 40 stehen, um Sauerstoff als Oxidationsmittel 28, das bei der Elektrolyse gebildet wird, dem Diesel-Oxidations-Katalysator 60 zuzuführen. Dies kann insbesondere über eine Steuer- und/oder Regelungseinrichtung 62 gesteuert und/oder geregelt erfolgen, die mit entsprechenden Ventilen und gegebenenfalls Pumpeinrichtungen zusammenwirkend ausgebildet ist.

Der Wasserelektrolyseur 40 befindet sich im Wasserspeicher 42, in dem Wasser 44 gespeichert ist.

Vom Diesel-Oxidations-Katalysator 60 wird das teilweise oxidierte Abgas 26 zu einem Dieselpartikelfilter 64 geleitet.

Vom Dieselpartikelfilter 64 wird das Abgas 26 zu einer Oxidations-Katalysator-Kammer 66 geleitet. Vor dem Einströmen in diese wird ein Stickoxidgehalt mit einer Messeinrichtung 68 gemessen. Diese Messeinrichtung 68 kann insbesondere in Form eines Stickoxid-Sensors ausgebildet sein.

Die Messeinrichtung 68 ist mit der Steuer- und/oder Regelungseinrichtung 62 über eine Verbindungsleitung 70 verbunden, um die gemessenen Stickoxid-Werte an die Steuer- und/oder Regelungseinrichtung 62 zu übertragen.

Der Oxidations-Katalysator-Kammer 66 kann ferner Reduktionsmittel 30 in Form von molekularem Wasserstoff zugeführt und durch einen Reduktionsmitteleinlass 72 eingeleitet werden.

An der Oxidations-Katalysator-Kammer 66 kann ferner eine Temperaturmesseinrichtung 74 zum Messen einer Temperatur in der Oxidations-Katalysator-Kammer 66 angeordnet oder ausgebildet sein. Die Temperaturmesseinrichtung 74 kann insbesondere in Form eines Temperatursensors ausgebildet sein.

Über eine Steuer- oder Verbindungsleitung 76 steht die Temperaturmesseinrichtung 74 mit der Steuer- und/oder Regelungseinrichtung 62 steuerungswirksam in Verbindung.

Das Abgas 26 wird von der Oxidations-Katalysator-Kammer 66 in die erste Behandlungskammer 18 eingeleitet, in der der Reduktionskatalysator 20 angeordnet ist. Dem Abgas 26 wird vor dem Eintreten in die erste Behandlungskammer 18 über einen Reduktionsmitteleinlass 78 Reduktionsmittel 30 in Form des elektrolytisch erzeugten Wasserstoffs zugeleitet.

Um die Behandlung des Abgases 26 mit der Steuer- und/oder Regelungseinrichtung 62 optimiert steuern und/oder regeln zu können, kann das Abgas 26 nach dem Austreten aus der ersten Behandlungskammer 18 an einer weiteren Messeinrichtung 80 zum Messen eines Stickoxidgehalts des Abgases 26 vorbeigeleitet werden. Die Messeinrichtung 80, beispielsweise in Form eines Stickoxid-Sensors, ist über eine weitere Verbindungsleitung 82 steuerungswirksam mit der Steuer- und/oder Regelungseinrichtung 62 verbunden.

Das aus der ersten Behandlungskammer 18 austretende Abgas 26 wird beispielsweise durch eine Schalldämpferkammer 80 und schließlich zu einem Endrohr 86 geleitet, aus dem die Abgase 26 austreten. Diese sind bei optimaler Einstellung des Systems 10 stickoxidfrei. Da ferner, anders als dies beim Einsatz von Harnstofflösungen der Fall ist, idealerweise kein Ammoniak als Zwischenprodukt entsteht, sind aus dem Endrohr 86 austretende Abgase frei von Ammoniak.

Mit der Steuer- und/oder Regelungseinrichtung 62 kann insbesondere die Menge erzeugten Reduktionsmittels 30 und Oxidationsmittels 28 gezielt gesteuert und/oder geregelt werden. Dies ermöglicht es insbesondere, die Abgase 26 auch bei einem Kaltstart des Verbrennungsmotors 14 so zu behandeln, dass die sonst üblichen Kaltstart-Schadstoffe im Abgas 26 nicht enthalten sind.

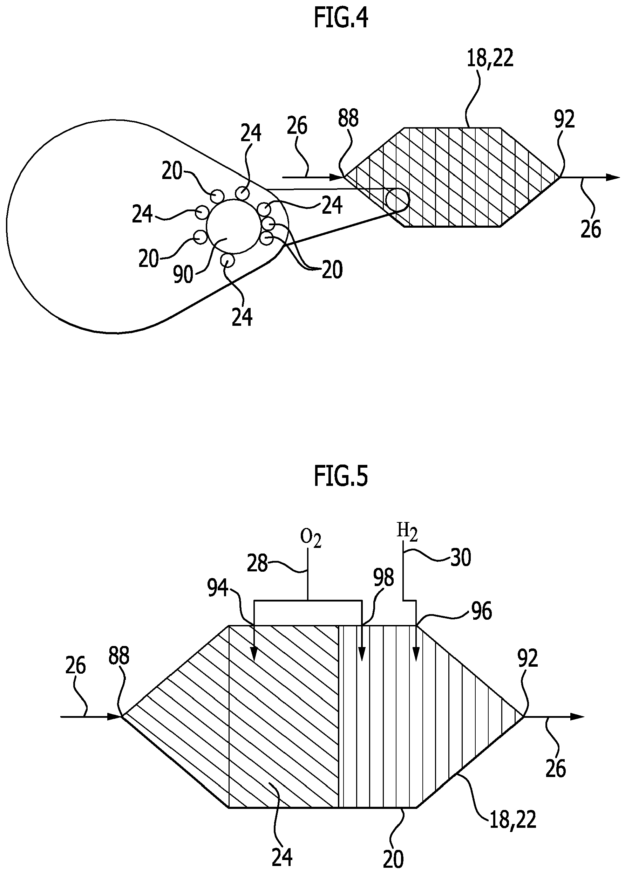

In den Figuren 4 und 5 sind zwei Beispiele für Behandlungskammern 18 dargestellt, die die Funktion der zweiten Behandlungskammer 18 mit vereinen.

Bei der in Figur 4 dargestellten ersten Behandlungskammer 18 wird Abgas 26 durch eine ersten Abgaseinlass 88 in die erste Behandlungskammer 18 geleitet.

In der ersten Behandlungskammer 18, welche somit auch die zweite Behandlungskammer 22 bildet, ist nicht nur ein Reduktionskatalysator 20 angeordnet, sondern auch ein Oxidationskatalysator 24. Diese sind in Form von Palladium- und Platin-Teilchen auf einem Träger 90 angeordnet und bilden so ein auf Materialebene gekoppeltes katalytisches System.

Das behandelte Abgas 26 strömt durch einen ersten Abgasauslass 92 aus der ersten Behandlungskammer 18 aus.

In Figur 5 ist eine Alternative zu dem in Figur 4 dargestellten und oben beschriebenen katalytischen System schematisch dargestellt.

Auch hier bildet die erste Behandlungskammer 18 die zweite Behandlungskammer 22. Allerdings sind der Oxidationskatalysator 24 und der Reduktionskatalysator 20 räumlich voneinander getrennt. So kann das Abgas 26 durch den ersten Abgaseinlass 88 zunächst den Oxidationskatalysator 24 überströmen und dann durch den Reduktionskatalysator 20 geleitet werden.

Dem den Oxidationskatalysator 24 durchströmenden Abgas 26 kann ferner durch einen Oxidationsmitteleinlass 94 Oxidationsmittel 28 in Form von molekularem Sauerstoff zugeführt werden, um die Oxidationsreduktion weiter zu verbessern.

Der ersten Behandlungskammer 18 kann durch einen Reduktionsmitteleinlass 96, der im Bereich des Reduktionskatalysators 20 angeordnet ist, Reduktionsmittel 30 in Form von molekularem Wasserstoff zugeführt werden.

Ferner kann an der ersten Behandlungskammer 18 auch im Bereich des Reduktionskatalysators 20 ein weiterer Oxidationsmitteleinlass 98 vorgesehen sein, um Oxidationsmittel 28 dem Abgas 26 auch beim Durchströmen des Reduktionskatalysators 20 zuzuführen.

Nach dem Durchströmen des Reduktionskatalysators 20 wird das Abgas 26 durch den ersten Abgasauslass 92 ausgeleitet.

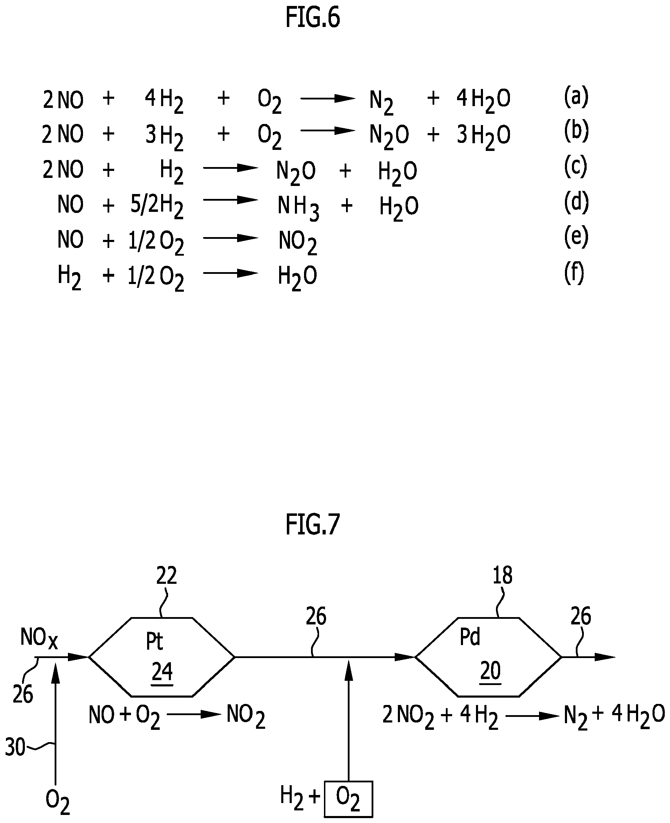

In Figur 6 sind die sechs Reaktionsgleichungen einer selektiven katalytischen Reduktion unter Einsatz von Wasserstoff dargestellt.

Um insbesondere die Ausbildung von Ammoniak gemäß Reaktionsgleichung (d) zu vermeiden, kann zusätzlich molekularer Sauerstoff zugeführt werden, um eine Oxidation von Stickstoffmonoxid NO zu Stickstoffdioxid NO₂ zu fördern. So kann insbesondere eine vollständige Umsetzung von Stickstoffdioxid mit Wasserstoff zu Stickstoff und Wasser gemäß folgender Gleichung erreicht werden:

2 NO₂ + 4H₂ → N₂ + 4 H₂O

Figur 7 zeigt nochmals vereinfacht die Anordnung einer ersten Behandlungskammer 18, die einer zweiten Behandlungskammer 22 nachgeschaltet ist. Sowohl der Reduktionskatalysator 20 in der ersten Behandlungskammer 18 als auch der Oxidationskatalysator 24 in der zweiten Behandlungskammer 22 können in Form von geträgerten Katalysatoren ausgebildet sein.

Unter den dargestellten Behandlungskammern 22 und 18 sind die wesentlichen Reaktionen bei der Abgasbehandlung der im Abgas 26 enthaltenen Stickoxide angegeben. So wird in der zweiten Behandlungskammer 22 Stickstoffmonoxid durch Zugabe von Sauerstoff zu Stickstoffdioxid oxidiert.

Die Reduktion von Stickstoffdioxid durch Zugabe von Wasserstoff findet in der ersten Behandlungskammer 18 statt.

Dem Abgas 26 kann vor dem Einleiten in die erste Behandlungskammer 18 optional molekularer Sauerstoff zugeführt werden, um die Bildung von Ammoniak (NH₃) zu unterdrücken. Allerdings muss hier sichergestellt werden, dass sich keine explosionsfähige Mischung von Wasserstoff und Sauerstoff einstellen kann.

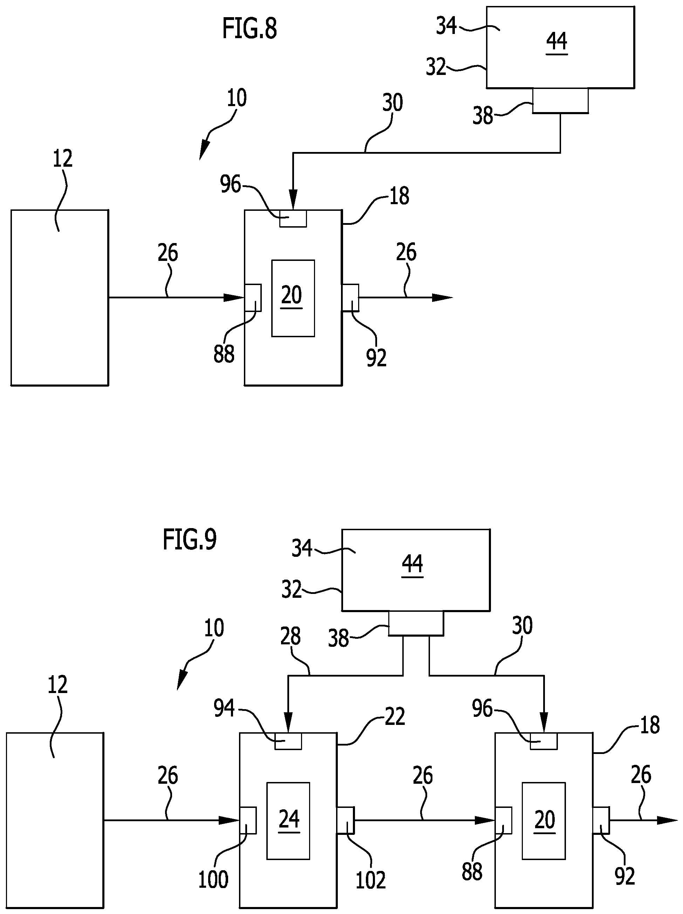

In den Figuren 8 bis 12 sind weitere Ausführungsbeispiele von Systemen zur Abgasbehandlung von Verbrennungsvorrichtungen schematisch dargestellt. Zur Bezeichnung der darin dargestellten Bauteile und Elemente sind die bereits oben verwendeten Bezugszeichen zur Kennzeichnung identischer oder funktionsgleicher Bauteile und Elemente verwendet.

Bei dem in Figur 8 dargestellten System 10 wird Abgas 26 von der Verbrennungsvorrichtung 12 durch einen ersten Abgaseinlass 88 der ersten Behandlungskammer 18 zugeführt. In dieser ist der Reduktionskatalysator 20 angeordnet.

In einem Abgasbehandlungsmittelspeicher 32 ist eine Abgasbehandlungsmittel 34, beispielsweise Wasser 44, gespeichert. Das Abgasbehandlungsmittel 30 wird einer Elektrolyseeinrichtung 38 zugeführt, die Reduktionsmittel 30 bei Bedarf erzeugt.

Das Reduktionsmittel 30 wird durch den Reduktionsmitteleinlass 96 der ersten Behandlungskammer 18 zugeführt.

Durch den ersten Abgasauslass 92 wird das behandelte Abgas 26 aus der ersten Behandlungskammer 18 ausgeleitet.

Das in Figur 9 schematisch dargestellte System 10 umfasst alle Komponenten des in Figur 8 dargestellten Systems 10. Allerdings ist hier zusätzlich eine zweite Behandlungskammer 22 zwischen der Verbrennungseinrichtung 12 und der ersten Behandlungskammer 18 angeordnet. Von der Verbrennungsvorrichtung 12 wird das Abgas 26 durch eine zweiten Abgaseinlass 100 in die zweite Behandlungskammer 22 geleitet.

Das bei der Elektrolyse von der Elektrolyseeinrichtung 38 erzeugte Oxidationsmittel 28 wird durch den Oxidationsmitteleinlass 94 in die zweite Behandlungskammer 22 eingeleitet, in der der Oxidationskatalysator 24 angeordnet ist. Das so zumindest teilweise oxidierte Abgas 26 wird durch einen zweiten Abgasauslass 102, der fluidwirksam mit dem ersten Abgaseinlass 88 verbunden ist, ausgeleitet und der ersten Behandlungskammer 18 zugeführt. In dieser findet wie oben in Verbindung mit Figur 8 beschrieben wiederum eine Reduktion von im Abgas 26 enthaltenen Verbrennungsprodukten statt.

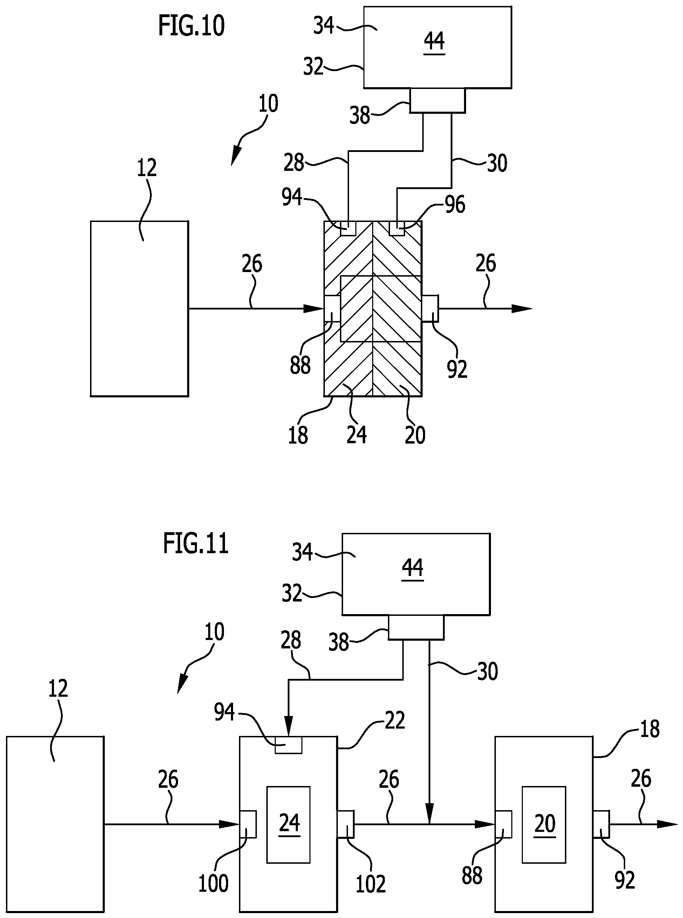

Das in Figur 10 schematisch dargestellte Ausführungsbeispiel eines Systems 10 umfasst lediglich eine erste Behandlungskammer 18. In dieser ist jedoch nicht nur der Reduktionskatalysator 20 angeordnet, sondern auch, aber räumlich getrennt, der Oxidationskatalysator 24.

Abgas 26 von der Verbrennungsvorrichtung 28 wird durch den ersten Abgaseinlass 88 in die erste Behandlungskammer 18 eingeleitet und durchströmt zunächst den entsprechend räumlich angeordneten Oxidationskatalysator 24.

Das mit der Elektrolyseeinrichtung 38 erzeugte Oxidationsmittel wird durch den Oxidationsmitteleinlass 94 in die erste Behandlungskammer 18 eingeleitet, und zwar in einem Bereich, in dem der Oxidationskatalysator 24 angeordnet ist.

Das mit der Elektrolyseeinrichtung 38 erzeugte Reduktionsmittel wird durch den Reduktionsmitteleinlass 96 in die erste Behandlungskammer 18 im Bereich des darin angeordneten Reduktionskatalysators 20 eingeleitet.

Das so in zwei Stufen in einer einzigen Behandlungskammer, nämlich der ersten Behandlungskammer 18, behandelte Abgas 26 wird schließlich durch den ersten Abgasauslass 92 ausgeleitet.

Ein weiteres Ausführungsbeispiel eines Systems 10 ist schematisch in Figur 11 dargestellt. Es entspricht im Wesentlichen dem in Figur 9 dargestellten und oben beschriebenen System 10.

Es unterscheidet sich von dem in Figur 9 dargestellten System 10 jedoch dadurch, dass das mit der Elektrolyseeinrichtung 38 erzeugte Reduktionsmittel 30 nicht direkt durch den Reduktionsmitteleinlass 96 in die erste Behandlungskammer 18 eingeleitet wird, sondern dem Abgas 26 vor dem Einleiten durch den ersten Abgaseinlass 88 in die erste Behandlungskammer 18 zugemischt wird. So kann eine besonders gute Durchmischung des Abgases 26 mit dem Reduktionsmittel 28 erreicht werden.

Die in den Figuren 8 bis 11 dargestellten Systeme 10 können insbesondere auch eine Steuer- und/oder Regelungseinrichtung 62 umfassen. Eine solche ist der Übersichtlichkeit wegen in den Figuren 8 bis 11 nicht dargestellt.

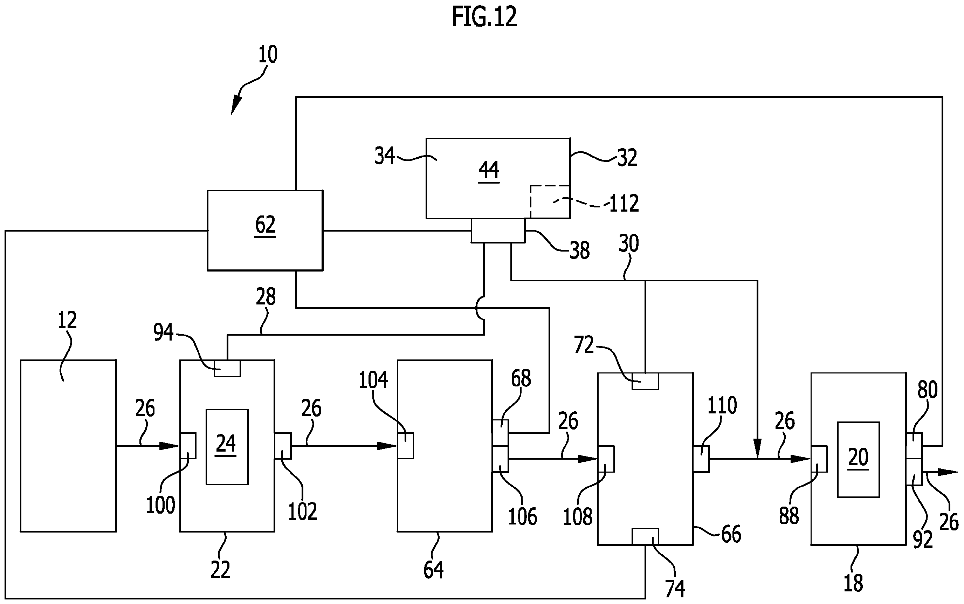

Das in Figur 12 schematisch dargestellte System 26 umfasst eine solche Steuer- und/oder Regelungseinrichtung 62. Diese ist mit der Elektrolyseeinrichtung 38 steuerungswirksam verbunden, insbesondere um die Menge an erzeugtem Reduktionsmittel 30 und Oxidationsmittel 28 zu steuern und/oder zu regeln.

Bei dem in Figur 12 dargestellten System 10 wird das Abgas 26 der Verbrennungsvorrichtung 12 zunächst der zweiten Behandlungskammer 22 durch den zweiten Abgaseinlass 100 zugeleitet.

Durch den Oxidationsmitteleinlass 94 wird bedarfsabhängig Oxidationsmittel 28, das von der Elektrolyseeinrichtung 38 erzeugt wird, der zweiten Behandlungskammer 22 zugeführt.

Das Abgas 26 mit teilweise oxidierten Verbrennungsprodukten wird durch den zweiten Abgasauslass 102 ausgeleitet und dem Dieselpartikelfilter 64 durch einen Einlass 104 zugeleitet. Im Bereich eines Auslasses 106 des Dieselpartikelfilters 64 ist die Messeinrichtung 68 zum Messen des Stickoxidgehalts im Abgas 26 angeordnet oder ausgebildet. Die Messeinrichtung 68 ist steuerungswirksam mit der Steuer- und/oder Regelungseinrichtung 62 verbunden.

Das Abgas 26 strömt durch einen Auslass 106 und wird der Oxidations-Katalysator-Kammer 66 durch deren Einlass 108 zugeführt.

Mit der Temperaturmesseinrichtung 74 wird die Temperatur des Abgases in der Oxidations-Katalysator-Kammer 66 gemessen.

Durch den Reduktionsmitteleinlass 72 wird mit der Elektrolyseeinrichtung 38 erzeugtes Reduktionsmittel 30 in die Oxidations-Katalysator-Kammer 66 eingeleitet.

Das durch den Auslass 110 der Oxidations-Katalysator-Kammer 66 ausgeleitete Abgas 26 wird nach Beimischung von Reduktionsmittel 30 durch den ersten Abgaseinlass 88 der ersten Behandlungskammer 18 zugeführt.

Im Bereich des ersten Abgasauslasses 92 ist eine weitere Messeinrichtung 80 zum Messen des Stickoxidgehalts im Abgas 26 angeordnet oder ausgebildet. Diese ist wiederum steuerungswirksam mit der Steuer- und/oder Regelungseinrichtung 62 verbunden.

Die Erzeugung sowie die Zufuhr von Reduktionsmittel 30 und Oxidationsmittel 28 kann in Abhängigkeit der mit den Messeinrichtungen 68 und 80 sowie der Temperaturmesseinrichtung 74 ermittelten Messwerten gezielt gesteuert und/oder geregelt werden.

Die in den Figuren 8 bis 12 dargestellten Systeme 10 können ferner für die Steuerung der Zufuhr von Reduktionsmittel 30 und Oxidationsmittel 28 in die erste und/oder zweite Behandlungskammer 18, 22 entsprechend angeordnete oder ausgebildete Ventile und optional entsprechende Pumpeinrichtungen umfassen.

Ferner kann, wie beispielhaft in Figur 12 gestrichelt eingezeichnet, auch bei jedem System 10 eine Heizeinrichtung 112 zum Beheizen des Abgasbehandlungsmittelspeichers 32 vorgesehen sein, um das Abgasbehandlungsmittel 34 in flüssiger Phase zu halten oder, insbesondere bei Einsatz der Systeme 10 in Kraftfahrzeugen bei Temperaturen unterhalb des Gefrierpunkts, gegebenenfalls wieder zu verflüssigen.

Die oben beschriebenen Systeme können zur Abgasbehandlung in Verbindung mit Verbrennungsvorrichtungen 12 nicht nur in Form von Verbrennungsmotoren 14, sondern auch in Form von Feuerungsanlagen, Müllverbrennungsanlagen, Gasturbinen oder Industrieanlagen eingesetzt werden.

Bei den beschriebenen Systemen 10 wird das Reduktionsmittel 30 gezielt und auf einfache Weise steuerbar durch Elektrolyse erzeugt.

Ferner sind die beschriebenen Systeme 10 allesamt Stickoxid-Speicher-frei beziehungsweise ein Stickoxidfallen-frei. Dies vereinfacht jeweils den Aufbau der Systeme 10 sowie auch deren Betrieb, da keine Regenerations-Zyklen durch eine Steuer- und/oder Regelungseinrichtung 62 gesteuert und/oder geregelt werden müssen. Zudem kann das gesamte von der Verbrennungsvorrichtung 12 erzeugte Abgas in gewünschter Weise kontinuierlich behandelt werden.

Durch die besondere Ausgestaltung der Systeme 10 sowie die mit diesen durchführbaren Verfahren ist es insbesondere möglich, nach Abschluss der Behandlung der Abgase 26 dieses frei von Ammoniak oder Kaltstart-Schadstoffen zu erhalten.

### Bezugszeichenliste

- 10: System
- 12: Verbrennungsvorrichtung
- 14: Verbrennungsmotor
- 16: Kraftfahrzeug
- 18: erste Behandlungskammer
- 20: Reduktionskatalysator
- 22: zweite Behandlungskammer
- 24: Oxidationskatalysator
- 26: Abgas
- 28: Oxidationsmittel
- 30: Reduktionsmittel
- 32: Abgasbehandlungsmittelspeicher
- 34: Abgasbehandlungsmittel
- 36: Reduktionsmittelerzeugungseinrichtung
- 38: Elektrolyseeinrichtung
- 40: Wasserelektrolyseur
- 42: Wasserspeicher
- 44: Wasser
- 46: Kathodenkammer
- 48: Kathode
- 50: Anodenkammer
- 52: Reduktionsmittelauslass
- 54: Oxidationsmittelauslass
- 56: Abgasreinigungsanlage
- 58: Dieselmotor
- 60: Diesel-Oxidations-Katalysator
- 62: Steuer- und/oder Regelungseinrichtung
- 64: Dieselpartikelfilter
- 66: Oxidations-Katalysator-Kammer
- 68: Messeinrichtung
- 70: Verbindungsleitung
- 72: Reduktionsmitteleinlass
- 74: Temperaturmesseinrichtung
- 76: Verbindungsleitung
- 78: Reduktionsmitteleinlass
- 80: Messeinrichtung
- 82: Verbindungsleitung
- 84: Schalldämpferkammer
- 86: Endrohr
- 88: erster Abgaseinlass
- 90: Träger
- 92: erster Abgasauslass
- 94: Oxidationsmitteleinlass
- 96: Reduktionsmitteleinlass
- 98: Oxidationsmitteleinlass
- 100: zweiter Abgaseinlass
- 102: zweiter Abgasauslass
- 104: Einlass
- 106: Auslass
- 108: Einlass
- 110: Auslass
- 112: Heizeinrichtung

## Patentansprüche

1. System (10) zur Abgasbehandlung von Verbrennungsvorrichtungen (12), insbesondere von Verbrennungsmotoren (14), umfassend eine erste Behandlungskammer (18) mit einem ersten Abgaseinlass (88), einem ersten Abgasauslass (92), einem Reduktionsmitteleinlass (96) und einem Reduktionskatalysator (20), welcher erste Abgaseinlass (88) direkt oder indirekt mit der Verbrennungsvorrichtung (12) fluidwirksam verbindbar ist, wobei das System (10) einen Abgasbehandlungsmittelspeicher (32) zum Speichern eines Abgasbehandlungsmittels (34) und eine Reduktionsmittelerzeugungseinrichtung (36) zum Erzeugen eines Reduktionsmittels (30) aus dem Abgasbehandlungsmittel (34) umfasst, **dadurch gekennzeichnet, dass** die Reduktionsmittelerzeugungseinrichtung (36) in Form einer Elektrolyseeinrichtung (38) zum Erzeugen des Reduktionsmittels (30) aus dem Abgasbehandlungsmittel (34) durch Elektrolyse ausgebildet ist.

2. System nach Anspruch 1, **dadurch gekennzeichnet, dass** die Elektrolyseeinrichtung (38)
a) in Form eines Wasserelektrolyseurs (40) ausgebildet ist und/oder
b) in Form einer kammergetrennten Elektrolyseeinrichtung (40) ausgebildet ist zum Trennen des bei der Elektrolyse entstehenden Reduktionsmittels (30) von dem entstehenden Oxidationsmittel (28) und/oder
c) fluidwirksam mit der ersten Behandlungskammer (18) verbunden ist zum Zuführen des erzeugten Reduktionsmittels (30) zur ersten Behandlungskammer (18).

3. System nach einem der voranstehenden Ansprüche, **gekennzeichnet durch** eine zweite Behandlungskammer (22) mit einem zweiten Abgaseinlass (100), einem zweiten Abgasauslass (102), einem Oxidationsmitteleinlass (94) und einem Oxidationskatalysator (24) wobei insbesondere
a) der Oxidationskatalysator (24) Platin ist oder enthält und/oder
b) das System eine Oxidationsmittelzuführeinrichtung zum Zuführen des Oxidationsmittels (28) zur zweiten Behandlungskammer (22) umfasst
und/oder
c) die erste Behandlungskammer (18) die zweite Behandlungskammer (22) bildet oder umfasst, dass der erste Abgaseinlass (88) den zweiten Abgaseinlass (100) bildet oder umfasst und dass der erste Abgasauslass (92) den zweiten Abgasauslass (102) bildet oder umfasst
und/oder
d) der zweite Abgasauslass (100) fluidwirksam mit dem ersten Abgaseinlass (88) verbunden ist.

4. System nach einem der voranstehenden Ansprüche, **dadurch gekennzeichnet, dass**
a) der Abgasbehandlungsmittelspeicher (32) in Form eines Wasserspeichers (42) ausgebildet ist
und/oder
b) das Abgasbehandlungsmittel (34) Wasser (44) ist und/oder
c) die Elektrolyseeinrichtung (38) mit dem Abgasbehandlungsmittelspeicher (32) fluidwirksam verbunden ist
und/oder
d) die Elektrolyseeinrichtung (38) im Abgasbehandlungsmittelspeicher (32) angeordnet oder ausgebildet ist
und/oder
e) das System eine Heizeinrichtung (112) zum Beheizen des Abgasbehandlungsmittelspeichers (32) umfasst
und/oder
f) der Reduktionskatalysator (20) Palladium ist oder enthält.

5. System nach einem der voranstehenden Ansprüche, **gekennzeichnet durch**
a) eine Messeinrichtung (68) zum Messen eines NOₓ-Gehalts des in
die erste Behandlungskammer (18) einströmenden Abgases (26) und/oder
b) eine Temperaturmesseinrichtung (74) zum Messen einer Temperatur des Abgases (26) in der ersten Behandlungskammer (18) und/oder
c) eine Reduktionsmittelzuführeinrichtung zum Zuführen des Reduktionsmittels (30) zur ersten Behandlungskammer (18).

6. System nach einem der Ansprüche 2 bis 5, **gekennzeichnet durch** eine Oxidationsmittelzuführeinrichtung zum Zuführen des Oxidationsmittels (28) zur zweiten Behandlungskammer (22).

7. System nach einem der voranstehenden Ansprüche, **dadurch gekennzeichnet, dass**
a) das System eine Steuer- und/oder Regelungseinrichtung (62) umfasst zum Steuern und/oder Regeln der Elektrolyseeinrichtung (38) und/oder der Reduktionsmittelzuführeinrichtung und/oder der Oxidationsmittelzuführeinrichtung, insbesondere in Abhängigkeit des mit der Messeinrichtung (68, 80) bestimmten NOₓ-Gehalts des in die erste Behandlungskammer (18) einströmenden Abgases (26) und/oder in Abhängigkeit der mit der Temperaturmesseinrichtung (74) gemessenen Temperatur des Abgases (26) in der ersten Behandlungskammer (18),
und/oder
b) der erste Abgaseinlass (88) mit dem Reduktionsmitteleinlass (96) fluidwirksam verbunden ist oder den Reduktionsmitteleinlass (96) bildet.

8. Verbrennungsvorrichtung (12) umfassend ein System (10) zur Abgasbehandlung nach einem der voranstehenden Ansprüche,
wobei insbesondere die Verbrennungsvorrichtung (12) in Form eines Verbrennungsmotors (14), einer Feuerungsanlage, einer Müllverbrennungsanlage, einer Gasturbine oder einer Industrieanlage ausgebildet ist.

9. Verfahren zur Abgasbehandlung von Verbrennungsvorrichtungen (12), insbesondere von Verbrennungsmotoren (14), umfassend das Reduzieren von Verbrennungsprodukten im Abgas (26) mit einem Reduktionsmittel (30) unter Verwendung eines Reduktionskatalysators (20), das Bereitstellen eines Abgasbehandlungsmittels (34) und das Erzeugen des Reduktionsmittels (30) aus dem Abgasbehandlungsmittel (34), **dadurch gekennzeichnet, dass** das Reduktionsmittel (30) aus dem Abgasbehandlungsmittel (34) durch Elektrolyse erzeugt wird.

10. Verfahren nach Anspruch 9, **dadurch gekennzeichnet, dass**
a) das Reduktionsmittel (30) durch Elektrolyse von Wasser (44) erzeugt wird
und/oder
b) das bei der Elektrolyse entstehende Reduktionsmittel (30) von dem entstehenden Oxidationsmittel (28) getrennt wird
und/oder
c) das erzeugte Reduktionsmittel (30) dem Abgas (26) in einer ersten Behandlungskammer (18) zugeführt wird.

11. Verfahren nach Anspruch 9 oder 10, **dadurch gekennzeichnet, dass** Verbrennungsprodukte im Abgas (26) mit einem Oxidationsmittel (28) unter Verwendung eines Oxidationskatalysators (24) oxidiert werden.

12. Verfahren nach Anspruch 11, **dadurch gekennzeichnet, dass**
a) die Reduktion von Verbrennungsprodukten und die Oxidation von Verbrennungsprodukten in der ersten Behandlungskammer (18) durchgeführt werden
und/oder
b) die Oxidation von Verbrennungsprodukten vor der Reduktion durchgeführt wird
und/oder
c) eine Temperatur des Abgases (26) bei der Oxidation gemessen wird.

13. Verfahren nach einem der Ansprüche 9 bis 12, **dadurch gekennzeichnet, dass**
a) Wasser (44) als Abgasbehandlungsmittel (34) bereitgestellt wird und/oder
b) das Abgasbehandlungsmittel (34) in einem Abgasbehandlungsmittelspeicher (32) bereitgestellt wird
und/oder
c) die Elektrolyse im Abgasbehandlungsmittelspeicher (32) durchgeführt wird
und/oder
d) das Abgasbehandlungsmittel (34) erwärmt oder aufgeheizt oder temperiert wird
und/oder
e) der Reduktionskatalysator (20) in Form von Palladium oder in Form eines Palladium enthaltenden Katalysators bereitgestellt wird
und/oder
f) der Oxidationskatalysator (24) in Form von Platin oder in Form eines Platin enthaltenden Katalysators bereitgestellt wird
und/oder
g) der NOₓ-Gehalt des Abgases (26) vor der Reduktion gemessen wird.

14. Verfahren nach einem der Ansprüche 9 bis 13, **dadurch gekennzeichnet, dass**
a) die Elektrolyse und/oder die Zufuhr des Reduktionsmittels (30) und/oder die Zufuhr des Oxidationsmittels (28) gesteuert und/oder geregelt werden, insbesondere in Abhängigkeit des gemessenen NOₓ-Gehalts des in die erste Behandlungskammer (18) einströmenden Abgases (26) und/oder in Abhängigkeit der gemessenen Temperatur des Abgases (26) in der ersten Behandlungskammer (18),
und/oder
b) das Abgas (26) zusammen mit dem Reduktionsmittel (30) in die erste Behandlungskammer (18) eingeleitet wird.

15. Verwendung eines Systems (10) nach einem der Ansprüche 1 bis 7 zur Durchführung eines Verfahrens nach einem der Ansprüche 9 bis 14.
